# EUROPÄISCHE PATENTSCHRIFT

(11) **EP 3 476 233 B1**
(45) Veröffentlichungstag und Bekanntmachung des Hinweises auf die Patenterteilung: **06.07.2022**
(21) Anmeldenummer: 18200621.3
(22) Anmeldetag: 16.10.2018
(51) Int. Cl.: A42B 3/04, B60R 22/48

(54) **DETEKTIONSVORRICHTUNG FÜR EINE SCHUTZVORRICHTUNG**
DETECTION DEVICE FOR A PROTECTIVE DEVICE
DISPOSITIF DE DÉTECTION POUR UN DISPOSITIF DE PROTECTION

(30) Priorität: 26.10.2017 DE 102017125111
(43) Veröffentlichungstag der Anmeldung: 01.05.2019
(73) Patentinhaber: TeraTron GmbH, 51647 Gummersbach (DE)
(72) Erfinder: Buschbeck, Sven, 51674 Wiehl (DE)
(74) Vertreter: Cohausz & Florack

(56) Entgegenhaltungen:
- EP-A1- 0 346 300
- WO-A1-2011/027369
- WO-A1-2016/157069
- DE-A1-102016 105 915
- GB-A- 2 386 732
- JP-B2- 5 376 572

## Beschreibung

Die Anmeldung betrifft eine Detektionsvorrichtung für eine Schutzvorrichtung, insbesondere einen Helm, eines Nutzers eines Fahrzeugs, wobei die Schutzvorrichtung mindestens eine Befestigungsanordnung mit mindestens einem Verschlussmittel umfasst. Darüber hinaus betrifft die Anmeldung eine Schutzvorrichtung, eine Auswertevorrichtung, ein Fahrzeug, ein System und ein Verfahren zum Betreiben eines Systems.

Bei Personenkraftwagen (PKW), aber auch bei anderen Fahrzeugen (z.B. Lastkraftwagen (LKW), bestehen in einer Vielzahl von Ländern Vorschriften für eine Gurtpflicht der Insassen eines PKWs. Insbesondere im PKW Bereich kann ferner die Pflicht bestehen, ein Detektionssystem zur Erkennung von nicht angeschnallten Insassen bzw. Nutzern zu detektieren. Bekannte Detektionssysteme verfügen hierbei über Sensoren, um einen Nutzer auf einem Sitz und den Zustand des Gurtverschlusses bzw. -schlosses zu detektieren. Zudem kann mindestens ein Sensor zum Erkennen des Fahrzeugzustands (z.B. Motor aktiviert oder nicht aktiviert, Fahrzeug in Bewegung oder Stillstand etc.) vorgesehen sein.

Wenn beispielsweise das System erkennt, dass ein Sitz von einem Nutzer belegt ist, das Fahrzeug sich gelichzeitig bewegt und in dem Gurtverschluss des entsprechenden Sitzes kein Gegenstück eingesetzt ist, kann ein entsprechendes (akustisches und/oder optisches) Signal generiert und ausgegeben werden.

Darüber hinaus besteht bei bestimmten anderen Fahrzeugarten (z.B. Motorrad, Quad etc.) in bestimmten Ländern die Pflicht, während des Betriebs eines entsprechenden Fahrzeugs eine Schutzvorrichtung (z.B. Helm) zu tragen. Dennoch kommt es in der Praxis vor, dass Nutzer eines Fahrzeugs, bei dem eine Pflicht zu Nutzung einer Schutzvorrichtung besteht, die Schutzvorrichtung nicht oder zumindest nicht ordnungsgemäß (z.B. mit geöffnetem Verschlussmittel) verwenden. Dies kann wiederum bei einem Unfall zu schweren Verletzungen führen.

Die Druckschrift EP 0 346 300 A1 offenbart ein Detektionsvorrichtung zum Verhindern der Nutzung eines Motorrads ohne Helm. Auch aus den Druckschriften WO 2011/027369 A1 und WO 2016/157069 A1 sind Detektionsvorrichtungen für Helme bekannt. Die Druckschrift DE 10 2016 105 915 A1 offenbart ein Sicherheitsgurtschloss für ein Auto, wobei das Gurtschloss eine Anzeige umfasst. Aus der JP 5 376572 B2 ist ein biometrisches Detektionssystem für ein Fahrzeug bekannt. Schließlich offenbart die GB 2 386 732 A eine Motorradkollisionsverhinderungsvorrichtung.

Der Anmeldung liegt daher die Aufgabe zugrunde, eine Detektionsvorrichtung für eine Schutzvorrichtung und/oder eine Auswertevorrichtung für ein Fahrzeug, bei dem eine Pflicht zu Nutzung der Schutzvorrichtung besteht, bereitzustellen, welche die Sicherheit des Nutzers verbessert.

Die Aufgabe wird gemäß einem ersten Aspekt der Anmeldung durch eine Detektionsvorrichtung für eine Schutzvorrichtung, insbesondere einen Helm, gemäß Anspruch 1 gelöst. Die Detektionsvorrichtung ist insbesondere für eine Implementierung an oder in einer Schutzvorrichtung eines Nutzers eines Fahrzeugs, bei dem eine Pflicht zu Nutzung der Schutzvorrichtung besteht, eingerichtet. Die Schutzvorrichtung umfasst mindestens eine Befestigungsanordnung mit mindestens einem Verschlussmittel. Die Detektionsvorrichtung umfasst mindestens einen Zustandssensor. Der Zustandssensor ist zum Detektieren einer Zustandsinformation des Verschlussmittels eingerichtet. Die Detektionsvorrichtung umfasst mindestens ein erstes drahtloses Kommunikationsmodul. Das erste drahtlose Kommunikationsmodul ist zumindest zum Aussenden der detektierten Zustandsinformation über einen drahtlosen Kommunikationskanal eingerichtet. Das erste drahtlose Kommunikationsmodul ist eingerichtet zum Empfangen von Daten, wobei als Daten Informationen über die Aktivierung einer Blinkereinrichtung übertragen werden.

Im Gegensatz zum Stand der Technik wird anmeldungsgemäß eine Detektionsvorrichtung bereitgestellt, die in einer tragbaren Schutzvorrichtung implementierbar ist und aufgrund eines ersten drahtlosen Kommunikationsmoduls eine Übertragung einer erfassten (augenblicklichen) Zustandsinformation des mindestens einen Verschlussmittels der Schutzvorrichtung an eine weitere Vorrichtung erlaubt, um ggf. einen nicht zulässigen Zustand des Verschlussmittels anzuzeigen. Die Sicherheit des Nutzers kann in einfacher Weise erhöht werden. Insbesondere wird anmeldungsgemäß ein Verschlusszustand einer Schutzvorrichtung erfasst und zur weiteren Verarbeitung, insbesondere Anzeige, an ein Fahrzeug des Nutzers der Schutzvorrichtung drahtlos übertragen.

Die Detektionsvorrichtung ist insbesondere eingerichtet, in einem Bauteil der Schutzvorrichtung integriert oder an einem Bauteil der Schutzvorrichtung angeordnet zu werden. Insbesondere kann die Integration oder Anordnung derart erfolgen, dass ein Zustandssensor der Detektionsvorrichtung zumindest eine Zustandsinformation des mindestens einen Verschlussmittels detektieren bzw. erfassen kann. Der Zustandssensor kann insbesondere an das von der Schutzvorrichtung verwendete Verschlussmittel angepasst sein. Beispielhafte und nicht abschließende Verschlussmittel umfassen Doppel-D-Ring-Verschlüsse, Drucktaster-Verschlüsse, Zahnriemen-Verschlüsse, Schieber-Verschlüsse, Steck-Verschlüsse und/oder Klapphelm-Verschlüsse. Die Zustandsinformation kann eine Information darstellen, die den augenblicklichen Zustand des Verschlussmittels (geöffnet, geschlossen, defekt etc.) angibt oder aus der dies abgeleitet werden kann.

Wie bereits beschrieben, umfassen detektierbare Zustände eines derartigen Verschlussmittels insbesondere einen geöffneten Zustand und einen geschlossenen Zustand. Bei einem Verschlussmittel, das insbesondere zumindest zwei zueinander korrespondierende Gegenstücke umfassen kann, ist unter einem geschlossenen Zustand zu verstehen, wenn die zumindest zwei Gegenstücke miteinander (mechanisch) gekoppelt, insbesondere miteinander verrastet, sind. Der Zustandssensor ist insbesondere zum Detektieren des geschlossenen Zustands, also insbesondere eines Verrastzustands, eingerichtet. Im geöffneten Zustand ist hingegen in einem ersten Gegenstück kein weiteres, zu diesem Gegenstück korrespondierendes Gegenstück eingeführt bzw. eingesetzt. Der Zustandssensor detektiert insbesondere die Abwesenheit des weiteren Gegenstücks in dem ersten Gegenstück. Vorzugsweise kann der Zustandssensor, insbesondere die Detektionseinrichtung, in einem Gegenstück eines Verschlussmittels integriert sein.

Der Zustandssensor ist insbesondere mit einem ersten drahtlosen Kommunikationsmodul derart gekoppelt, dass eine erfasste Zustandsinformation, insbesondere zumindest eine erfasste geschlossene Zustandsinformation, dem ersten drahtlosen Kommunikationsmodul bereitstellbar ist. Die Zustandsinformation, zumindest eine erfasste geschlossene Zustandsinformation, kann von dem ersten drahtlosen Kommunikationsmodul derart ausgesendet werden, dass die Information von einer empfangenen Vorrichtung ausgewertet und insbesondere angezeigt werden kann.

Gemäß einer bevorzugten Ausführungsform der anmeldungsgemäßen Detektionsvorrichtung kann das erste drahtlose Kommunikationsmodul ausgewählt sein aus der Gruppe, umfassend:
- Bluetooth Modul, insbesondere Bluetooth-Low-Energy Modul,
- RFID (Radio-Frequency Identification)-Modul,
- GSM (Global System for Mobile Communications)-Modul, und
- WLAN (Wireless Local Area Network)-Modul.

Besonders bevorzugt kann aufgrund der bereitgestellten definierten Reichweite des entsprechenden Moduls das erste Kommunikationsmodul ein Bluetooth Modul, insbesondere Bluetooth-Low-Energy Modul, oder RFID-Modul sein. Insbesondere ein Bluetooth Modul ermöglicht eine sichere Übertragung und/oder eine einfach herstellbare drahtlose Kommunikationsverbindung. Bei Verwendung eines RFID-Moduls kann es von Vorteil sein, dieses als passives RFID-Tag auszugestalten, welches die zum Aussenden des Zustands und insbesondere zum Erfassen des Zustands benötigte elektrische Energie von einem korrespondierenden RFID-Modul (insbesondere RFID-Leser) empfangen kann.

Es versteht sich, dass zwei oder mehr unterschiedliche erste Kommunikationsmodule vorgesehen sein können, um unterschiedliche Anbindungstechnologien zu unterstützen.

Gemäß einer weiteren Ausführungsform kann das erste drahtlose Kommunikationsmodul zum Empfangen von Daten eingerichtet sein. Beispielsweise können als Daten Informationen über die Aktivierung einer Blinkereinrichtung übertragen werden. Insbesondere kann es sich um akustische Daten handeln. Die Schutzvorrichtung kann eine Nutzerschnittstelle (z.B. Mikrophon und/oder Display) aufweisen, um dem Nutzer eine akustische und/oder optische Rückmeldung der Aktivierung der Blinkereinrichtung bereitzustellen. Mit anderen Worten kann das erste drahtlose Kommunikationsmodul eine bidirektionale, drahtlose Kommunikation zur Verfügung stellen. In entsprechender Weise kann ein zweites drahtloses Kommunikationsmodul gebildet sein.

Ein weiterer Aspekt der Anmeldung ist eine Schutzvorrichtung. Die Schutzvorrichtung umfasst mindestens eine zuvor beschriebene Detektionsvorrichtung. Insbesondere kann die zuvor beschriebene Detektionsvorrichtung in einer Schutzvorrichtung verwendet werden. Unter einer Schutzvorrichtung ist vorliegend eine Schutzbedeckung zu verstehen, die von einem Nutzer tragbar ist und den Nutzer gegen mechanische Einwirkungen schützt. Die Schutzvorrichtung kann insbesondere ein Helm sein, ist jedoch nicht hierauf beschränkt.

Die Schutzvorrichtung umfasst mindestens eine Befestigungsanordnung mit mindestens einem (zuvor beschriebenen) Verschlussmittel. Die Befestigungsanordnung kann beispielsweise neben dem Verschlussmittel mindestens einen Riemen (vorzugsweise zumindest zwei Riemen) umfassen. Ein Ende des Riemens kann beispielsweise ein Gegenstück des Verschlussmittels umfassen. Das andere Ende kann beispielsweise mit einer Außenschale eines Helms verbunden, beispielsweise vernietet, sein. Der Riemen kann beispielswese einen Nylonriemen umfassen. Die Befestigungsanordnung sorgt mit Hilfe des Verschlussmittels (in einem geschlossenen Zustand dafür), dass die Schutzvorrichtung auch bei einem Sturz dort bleibt wo sie hingehört.

Vorzugsweise kann die Detektionsvorrichtung in der Schutzvorrichtung integriert sein. Dies reduziert zumindest das Manipulationsrisiko. Besonders bevorzugt kann die Detektionsvorrichtung in dem Verschlussmittel integriert sein.

Gemäß einer bevorzugten Ausführungsform der anmeldungsgemäßen Schutzvorrichtung kann die Schutzvorrichtung mindestens ein Energieversorgungsmodul umfassen. Das Energieversorgungsmodul kann zumindest zum Versorgen des ersten drahtlosen Kommunikationsmoduls mit elektrischer Energie eingerichtet sein, derart, dass zumindest das Aussenden einer detektierten Zustandsinformation über einen drahtlosen Kommunikationskanal ermöglicht wird. Insbesondere kann das Energieversorgungsmodul zumindest das erste drahtlose Kommunikationsmodul und den Zustandssensor mit elektrischer Energie versorgen. Beispielhafte und nicht abschließende Energieversorgungsmodule sind auswechselbare Batterien, wiederaufladbare Batterien, Photovoltaikmodule, Spulen etc. Bei einer wiederaufladbaren Batterie kann die Schutzvorrichtung beispielsweise über einen Ladeanschluss verfügen, der zum Beispiel eine Verbindung mit einem Ladekabel ermöglicht. Auch kann eine induktive Ladung vorgesehen sein. Beispielsweise kann das Fahrzeug über eine zu dem Ladeanschluss korrespondierenden Ladeanschluss verfügen, um eine Aufladung beispielsweise während einer Betriebspause des Fahrzeugs zu ermöglichen. Ein Photovoltaikmodul kann beispielsweise auf einer Außenfläche der Schutzvorrichtung, wie der Außenschale eines Helms, angeordnet sein. Insbesondere kann eine flexible Photovoltaikfolie aufklebbar sein.

Wie bereits beschrieben wurde, kann insbesondere bei RFID eine Übertragung der erforderlichen Energie über den drahtlosen Kanal erfolgen. Zum Empfang der Energie kann mindestens eine Spule vorgesehen sein. Die Spule kann ebenfalls für die Kommunikation von Daten verwendet werden.

In einfacher Weise kann eine ausreichende Energieversorgung bereitgestellt werden.

Ein Fahrzeug, insbesondere ein Motorrad, ist insbesondere ein Fahrzeug, bei dem eine Pflicht zur Nutzung der Schutzvorrichtung besteht. Die Auswertevorrichtung umfasst mindestens ein zweites drahtloses Kommunikationsmodul, eingerichtet zum Empfangen einer detektierten Zustandsinformation eines Verschlussmittels einer Schutzvorrichtung, insbesondere einer zuvor beschriebenen Schutzvorrichtung, eines Nutzers des Fahrzeugs. Die Auswertevorrichtung umfasst mindestens ein Auswertemodul. Das Auswertemodul ist zum Bestimmen des Zustands des Verschlussmittels zumindest in Abhängigkeit der empfangbaren detektierten Zustandsinformation und zum Ausgeben des bestimmten Zustands des Verschlussmittels eingerichtet.

Die Auswertevorrichtung kann zumindest teilweise in dem Fahrzeug integriert sein. Insbesondere kann die Auswertevorrichtung zumindest teilweise von ohnehin in dem Fahrzeug vorgesehenen Komponenten realisiert sein. Beispielsweise kann das Auswertemodul zumindest teilweise von einem Prozessor des Bordnetzes des Fahrzeugs gebildet sein.

Das mindestens eine zweite drahtlose Kommunikationsmodul der Auswertevorrichtung korrespondiert insbesondere zu dem mindestens einen ersten Kommunikationsmodul der Detektionsvorrichtung. Insbesondere ist das zweite drahtlose Kommunikationsmodul eingerichtet, über einen drahtlosen Kommunikationskanal eine von der Detektionsvorrichtung erfasste Zustandsinformation (z.B. geschlossen oder geöffnet) zu empfangen. Zusätzlich kann das zweite drahtlose Kommunikationsmodul zur Übertragung von Daten und/oder Energie an ein erstes Kommunikationsmodul eingerichtet sein.

Das Auswertemodul ist eingerichtet, abhängig von der empfangbaren Zustandsinformation des Verschlussmittels den (augenblicklichen) Zustand des Verschlussmittels zu bestimmen und insbesondere auszugeben. Unter einer Bestimmung abhängig von einer empfangbaren detektierten Zustandsinformation ist vorliegend insbesondere zu verstehen, dass auch das Nicht-Empfangen einer Zustandsinformation ausgewertet wird und/oder aus der Zustandsinformation der Zustand bestimmt wird.

Beispielsweise kann vorgesehen sein, dass nur eine "geschlossene" Zustandsinformation des Verschlussmittels übertragen wird. Das Ausbleiben eines Empfangs einer derartigen Information kann zur Bestimmung genutzt werden. Insbesondere wird in diesem Fall bestimmt, dass das Verschlussmittel sich in einem geöffneten bzw. zumindest nicht in einem geschlossenen Zustand befindet. Eine entsprechende Information kann von dem Auswertemodul ausgegeben werden. Bei Bestimmung eines geschlossenen Zustands kann diese Information gemäß einer Ausführungsform ausgegeben werden. Dies kann gemäß einer weiteren Ausführungsform auch unterbleiben.

Gemäß einer bevorzugten Ausführungsform der anmeldungsgemäßen Auswertevorrichtung kann das zweite drahtlose Kommunikationsmodul ausgewählt sein aus der Gruppe, umfassend:
- Bluetooth Modul, insbesondere Bluetooth-Low-Energy Modul,
- RFID (Radio-Frequency Identification)-Modul,
- GSM (Global System for Mobile Communications)-Modul, und
- WLAN (Wireless Local Area Network)-Modul.

Wie bereits beschrieben wurde, ist insbesondere die Verwendung eines Bluetooth-Moduls und/oder eines RFID-Moduls bevorzugt. Bei dem RFID-Modul kann es sich um ein Lesemodul handeln, welches beispielsweise ein Lesefeld nach Aktivierung des Fahrzeugs aussendet. Gelangt eine Detektionsvorrichtung in das Lesefeld, kann beispielsweise in zuvor beschriebener Weise elektrische Energie übertragen werden. Insbesondere kann zumindest ein Zustand, zumindest ein geschlossener Zustand, von dem Lesemodul aus der Detektionsvorrichtung in zuvor beschriebener Weise ausgelesen werden.

Das Fahrzeug umfasst mindestens eine zuvor beschriebene Auswertevorrichtung. Insbesondere kann die zuvor beschriebene Auswertevorrichtung in einem Fahrzeug verwendet werden. Wie bereits beschrieben wurde, kann die Auswertevorrichtung zumindest teilweise in dem Fahrzeug integriert und zumindest teilweise von dessen Komponenten gebildet sein.

Das Fahrzeug ist ein Fahrzeug, bei dem eine Pflicht zur Verwendung der Schutzvorrichtung besteht. Beispielhafte und nicht abschließende Fahrzeuge sind Motorräder, Fahrräder, Quads, Roller, Segway und Scooter.

Gemäß einer ersten Ausführungsform des anmeldungsgemäßen Fahrzeugs kann das Fahrzeug mindestens ein akustisches und/oder optisches Anzeigemodul umfassen. Insbesondere kann das Auswertemodul mit dem Anzeigenmodul gekoppelt sein. Das Auswertemodul kann einen bestimmten Zustand, zumindest einen bestimmten geöffneten Zustand, an das Anzeigemodul ausgeben. Das Anzeigemodul kann zum Anzeigen des ausgegebenen Zustands des Verschlussmittels eingerichtet sein. In einfacher Weise kann ein Nutzer zumindest über ein zumindest nicht vollständig geschlossenes Verschlussmittel seiner Schutzvorrichtung informiert werden.

Darüber hinaus kann das Fahrzeug gemäß einer besonders bevorzugten Ausführungsform mindestens eine Sitzeinrichtung mit mindestens einem der Sitzeinrichtung zugeordneten Anwesenheitssensor umfassen. Der Anwesenheitssensor (z.B. ein Gewichtssensor) kann zum Detektieren einer Anwesenheitsinformation eines Nutzers auf der Sitzeinrichtung eingerichtet sein. Das Auswertemodul kann zum Bestimmen des Zustands des Verschlussmittels in Abhängigkeit des empfangbaren detektierten Zustands und der Anwesenheitsinformation eingerichtet sein. Insbesondere kann jede Sitzeinrichtung über jeweils mindestens einen Anwesenheitssensor verfügen. Der Anwesenheitssensor kann mit der Auswertevorrichtung, insbesondere dem Auswertemodul, gekoppelt sein. Zumindest für den Fall, dass die Anwesenheit eines Nutzers auf einer Sitzeinrichtung detektiert wird, kann diese Anwesenheitsinformation an das Auswertemodul übertragen werden.

Wenn beispielsweise zwei Sitzeinrichtungen von Nutzern belegt sind, jedoch nur von einer Schutzvorrichtung die Zustandsinformation vorliegt, dass das Verschlussmittel sich im geschlossenen Zustand befindet, kann das Auswertemodul eine entsprechende Information ausgeben. Das zuvor beschriebene Anzeigemodul kann zum Anzeigen des nicht verschlossenen Verschlussmittels von einem Nutzer bzw. der Schutzvorrichtung eines Nutzers basierend auf der erhaltenen Information eingerichtet sein.

Ein weiterer Aspekt der Anmeldung ist ein System, umfassend mindestens eine zuvor beschriebene Detektionsvorrichtung und mindestens eine zuvor beschriebene Auswertevorrichtung. Das System kann insbesondere in einer zuvor beschriebenen Schutzvorrichtung und einem zuvor beschriebenen Fahrzeug verwendet werden.

Ein noch weiterer Aspekt der Anmeldung ist ein Verfahren zum Betreiben eines Systems mit mindestens einer zuvor beschriebenen Detektionsvorrichtung und mindestens einer zuvor beschriebene Auswertevorrichtung. Das Verfahren umfasst:
- Detektieren einer Zustandsinformation eines Verschlussmittels einer Schutzvorrichtung,
- drahtloses Übertragen der detektierten Zustandsinformation des Verschlussmittels von einem erstes drahtlosen Kommunikationsmodul der Detektionsvorrichtung an mindestens ein zweites drahtloses Kommunikationsmodul der Auswertevorrichtung,
- Bestimmen des Zustands des Verschlussmittels zumindest in Abhängigkeit der empfangbaren Zustandsinformation, und
- Ausgeben des bestimmten Zustands des Verschlussmittels.

Die Merkmale der Detektionsvorrichtungen, Schutzvorrichtungen, Auswertevorrichtungen, Fahrzeuge, Systeme und Verfahren sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die anmeldungsgemäße Detektionsvorrichtung, die anmeldungsgemäße Schutzvorrichtung, die anmeldungsgemäße Auswertevorrichtung, das anmeldungsgemäße Fahrzeug, das anmeldungsgemäße System und das anmeldungsgemäße Verfahren auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels einer Detektionsvorrichtung gemäß der vorliegenden Anmeldung für eine Schutzvorrichtung,
- Fig. 2: eine schematische Ansicht eines Ausführungsbeispiels einer Schutzvorrichtung gemäß der vorliegenden Anmeldung,
- Fig. 3: eine schematische Ansicht eines Ausführungsbeispiels einer Auswertevorrichtung gemäß der vorliegenden Anmeldung für ein Fahrzeug, und
- Fig. 4: eine schematische Ansicht eines Ausführungsbeispiels eines Fahrzeugs gemäß der vorliegenden Anmeldung.

In den Figuren werden für gleiche Elemente gleiche Bezugszeichen verwendet.

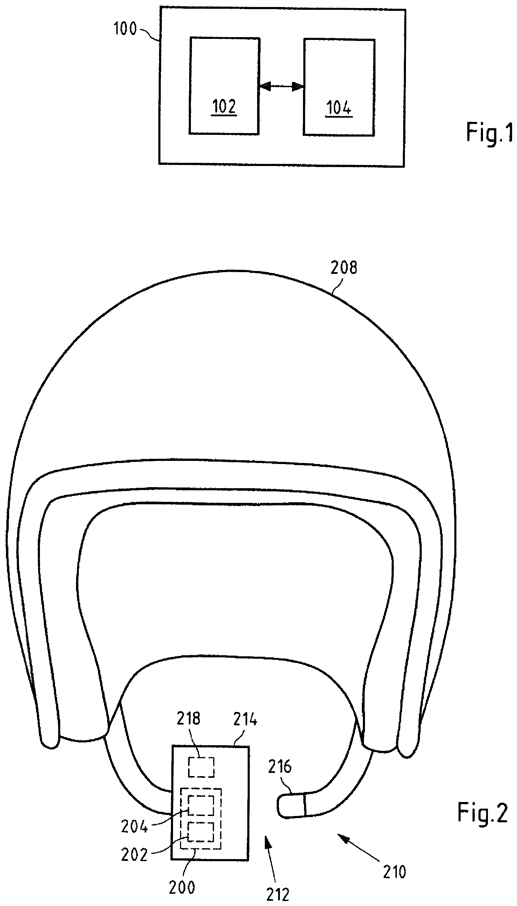

Die Figur 1 zeigt eine schematische Ansicht eines Ausführungsbeispiels einer Detektionsvorrichtung 100 gemäß der vorliegenden Anmeldung für eine Schutzvorrichtung. Die Detektionsvorrichtung 100 umfasst mindestens einen Zustandssensor 102 und mindestens ein erstes drahtloses Kommunikationsmodul 104. Wie zu erkennen ist, kann der Zustandssensor 102 mit dem drahtlosen Kommunikationsmodul 104 kommunizieren, um beispielsweise eine erfasste Zustandsinformation eines Verschlussmittels (geöffnet oder geschlossen) bereitzustellen.

Das erste drahtlose Kommunikationsmodul 104 kann insbesondere ein RFID-Modul oder Bluetooth-Modul sein. Das erste drahtlose Kommunikationsmodul 104 ist eingerichtet, eine erfasste Zustandsinformation, insbesondere zumindest eine erfasste geschlossene Zustandsinformation, auszusenden.

Hierbei kann die Aussendung aktiv von dem ersten drahtlosen Kommunikationsmodul 104 oder erst nach Empfang einer Anfrage, wie dem Empfang eines Sendefeldes und/oder einer Anfragenachricht, durchgeführt werden. Es versteht sich, dass der Zustandssensor 102 und das erste drahtlose Kommunikationsmodul 104 aus Software- und/oder Hardwarekomponenten gebildet sein können. Die Detektionsvorrichtung 100 kann hierbei eine kompakte Einheit bilden und insbesondere in einer Schutzvorrichtung integrierbar sein.

Die Figur 2 zeigt eine schematische Ansicht eines Ausführungsbeispiels einer Schutzvorrichtung 208 gemäß der vorliegenden Anmeldung. Die Schutzvorrichtung 208 ist vorliegend ein Helm 208, insbesondere ein Motorradhelm 208. Die Schutzvorrichtung 208 ist insbesondere von einem Nutzer tragbar und schützt vor mechanischen Einwirkungen.

Für ein sicheres Tragen des Helms 208 verfügt der Helm über mindestens eine Befestigungsanordnung 210 mit mindestens einem schematisch dargestellten Verschlussmittel 212. Die Befestigungsanordnung 210 sorgt, in einem geschlossenen Zustand des Verschlussmittels 212, für einen sicheren Sitz des Helmes 208, auch bei einem Sturz des Nutzers. Vorliegend ist das Verschlussmittel 212 in einem geöffneten Zustand dargestellt.

Wie zu erkennen ist, ist vorliegend das Verschlussmittel 212 aus einem ersten Gegenstück 214 und einem hierzu korrespondierenden weiteren Gegenstück 216 gebildet. Beispielsweise kann das erste Gegenstück 214 durch eine Rastaufnahme 214 gebildet sein, in die das weitere Gegenstück 216 in Form einer Rastzunge 216 eingesetzt und mechanisch verrastet werden kann.

Dieser Verrastzustand kann von dem zuvor beschriebenen Zustandssensor 202 einer Detektionsvorrichtung 200 erfasst und insbesondere einem ersten drahtlosen Kommunikationsmodul 204 der Detektionsvorrichtung 200 in Form einer Zustandsinformation bereitgestellt werden. Zur Vermeidung von Wiederholungen wird hinsichtlich der Detektionsvorrichtung 200 auf das vorherige Ausführungsbeispiel verwiesen.

Wie der Figur 2 zu entnehmen ist, ist vorliegend die Detektionsvorrichtung 200 in dem Verschlussmittel 212, insbesondere in einem Gegenstück 214, integriert. Zur Energieversorgung der Detektionsvorrichtung 200 ist mindestens ein Energieversorgungsmodul 218 vorgesehen. Vorliegend ist das Energieversorgungsmodul 218 als auswechselbare und/oder wiederaufladbare Batterie gebildet. Alternativ oder zusätzlich kann als Energieversorgungsmodul mindestens ein z.B. auf der Außenschale des Helms 208 angeordnetes Photovoltaikmodul und/oder eine Spule, wie die Spule eines RFID-Moduls, eingesetzt werden.

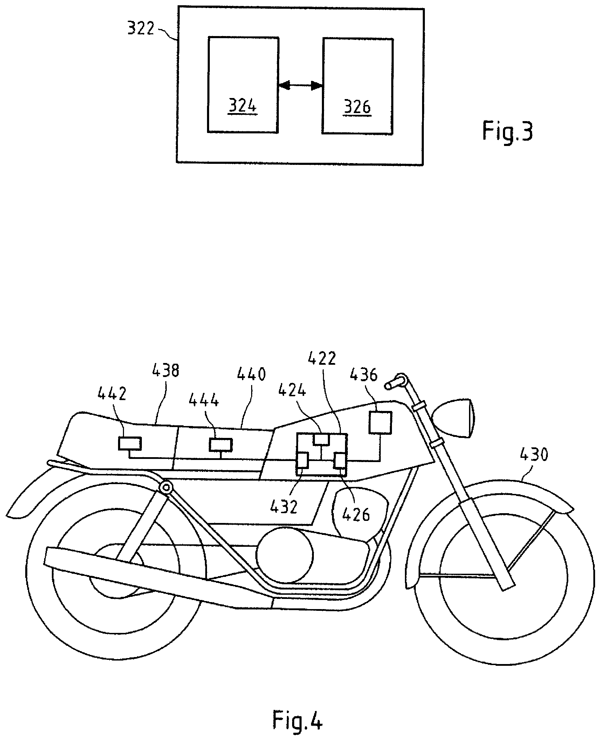

Die Figur 3 zeigt eine schematische Ansicht eines Ausführungsbeispiels einer Auswertevorrichtung 322. Die Auswertevorrichtung 322 ist insbesondere für die Installierung in einem Fahrzeug eingerichtet, bei dem eine Pflicht zur Verwendung einer Schutzvorrichtung, wie die zuvor beschriebene Schutzvorrichtung 200, besteht.

Die Auswertevorrichtung 322 umfasst mindestens ein zweites drahtloses Kommunikationsmodul 324 und mindestens ein Auswertemodul 326, die in Kommunikation zueinander stehen. Das zweite drahtlose Kommunikationsmodul 324 korrespondiert zu einem ersten drahtlosen Kommunikationsmodul einer Detektionsvorrichtung. Beispielsweise kann das zweite drahtlose Kommunikationsmodul 324 ein Bluetooth-Modul oder ein RFID-Modul sein.

Das zweite drahtlose Kommunikationsmodul 324 ist zumindest zum Empfangen einer erfassten Zustandsinformation eines Verschlussmittels von einem ersten drahtlosen Kommunikationsmodul eingerichtet. Es versteht sich, dass das zweite drahtlose Kommunikationsmodul 324 auch zum Senden von Daten (und/oder Energie) an ein erstes drahtloses Kommunikationsmodul eingerichtet sein kann.

Eine empfangene Zustandsinformation kann dem Auswertemodul 326 bereitgestellt werden. Das Auswertemodul 326 ist eingerichtet, basierend auf einer empfangbaren Zustandsinformation insbesondere den augenblicklichen Zustand eines Verschlussmittels zu bestimmen. Der Bestimmungs- bzw. Auswerteschritt umfasst vorzugsweise das Prüfen, ob eine Zustandsinformation vorliegt und wenn eine vorliegt, welcher Zustand erfasst worden ist. Liegt keine Zustandsinformation vor, kann bei einer Ausführungsform vorgesehen sein, dass das Auswertemodul 326 diese Information derart auswertet, dass das Verschlussmittel nicht ordnungsgemäß geschlossen bzw. geöffnet ist. Eine entsprechende Information kann ausgegeben werden.

Alternativ oder zusätzlich kann vorgesehen sein, dass das Auswertemodul 326 zunächst eine Abfrage durch das zweite drahtlose Kommunikationsmodul 324 bewirkt. Dieses kann beispielsweise dann ein Sendefeld und/oder eine entsprechende Anfragenachricht aussenden und eine Zustandsinformation anfordern. Wird eine Zustandsinformation als Antwort hierauf empfangen, so kann diese Zustandsinformation von dem Auswertemodul 326 ausgewertet und der enthaltenen Zustand beispielsweise als Zustand des Verschlussmittels bestimmt und insbesondere ausgegeben werden. Wird auch jetzt keine Zustandsinformation empfangen, so wird das Auswertemodul 326 diese Information derart auswerten, dass das Verschlussmittel nicht ordnungsgemäß geschlossen bzw. geöffnet ist.

Wie bereits beschrieben wurde, kann bei Vorliegen einer empfangen Zustandsinformation dieser Zustand von dem Auswertemodul 326 als Zustand des Verschlussmittels bestimmt und insbesondere ausgegeben werden.

Die Figur 4 zeigt eine schematische Ansicht eines Ausführungsbeispiels eines Fahrzeugs 430 gemäß der vorliegenden Anmeldung. Das Fahrzeug 430 ist vorliegend ein Motorrad 430. Das Motorrad umfasst vorliegend eine Auswertevorrichtung 422. Zur Vermeidung von Wiederholungen werden vorliegend nur die Unterschiede der Auswertevorrichtung 422 im Vergleich zu der Auswertevorrichtung nach Figur 3 beschrieben und ansonsten auf die obigen Ausführungen verwiesen.

Das Motorrad 430 verfügt vorliegend über zwei Sitzeinrichtungen 438, 440, denen jeweils ein Anwesenheitssensor 442, 444 zugeordnet ist. Beispielsweise kann ein Gewichtssensor 442, 444 vorgesehen sein. Übersteigt das gemessene Gewicht einen bestimmten Grenzwert, so kann auf die Anwesenheit eines Nutzers auf der zugeordneten Sitzeinrichtung 438, 440 geschlossen werden. Die Auswertung kann von dem jeweiligen Anwesenheitssensor 442, 444 oder von der Auswertevorrichtung 422 (oder einer weiteren, nicht dargestellten Vorrichtung) durchgeführt werden.

Die Auswertevorrichtung 422 ist vorliegend eingerichtet, basierend auf den Daten der Anwesenheitssensoren 442, 444, also einer Anwesenheitsinformation, und auf empfangbaren detektierten Zustandsinformationen den augenblicklichen Zustand eines Verschlussmittels einer zuvor beschriebenen Schutzvorrichtung zu bestimmen und insbesondere auszugeben. Der augenblickliche Zustand kann an mindestens ein Anzeigenmodul 436 (z.B. Bildschirm, Lautsprecher etc.) des Motorrads 430 ausgegeben und von diesem in geeigneter Weise angezeigt werden. Ein Nutzer wird daher zumindest über einen nicht geschlossenes Verschlussmittels seiner Schutzvorrichtung oder der seines Mitfahrers informiert. Die Sicherheit kann signifikant verbessert werden.

Insbesondere kann das Auswertemodul 426 bestimmen, ob für jeden erkannten Nutzer eine Zustandsinformation der Verschlussmittels, insbesondere zumindest eine geschlossene Zustandsinformation, empfangen wurde. Die Auswertung von empfangbaren Zustandsinformationen kann insbesondere, wie zuvor beschrieben wurde (siehe z.B. Figur 3), durchgeführt werden.

## Patentansprüche

1. Detektionsvorrichtung (100, 200) für eine Schutzvorrichtung (208), insbesondere einen Helm (208), eines Nutzers eines Fahrzeugs (430), wobei die Schutzvorrichtung (208) mindestens eine Befestigungsanordnung (210) mit mindestens einem Verschlussmittel (212) umfasst,
- wobei die Detektionsvorrichtung (100, 200) mindestens einen Zustandssensor (102, 202) umfasst, eingerichtet zum Detektieren einer Zustandsinformation des Verschlussmittels (212), und
- wobei die Detektionsvorrichtung (100, 200) mindestens ein erstes drahtloses Kommunikationsmodul (104, 204) umfasst, eingerichtet zumindest zum Aussenden der detektierten Zustandsinformation über einen drahtlosen Kommunikationskanal,
**dadurch gekennzeichnet, dass**
- das erste drahtlose Kommunikationsmodul (104, 204) zum Empfangen von Daten eingerichtet ist, wobei als Daten Informationen über die Aktivierung einer Blinkereinrichtung übertragen werden.

2. Detektionsvorrichtung (100, 200) nach Anspruch 1, **dadurch gekennzeichnet, dass** das erste drahtlose Kommunikationsmodul (104, 204) ausgewählt ist aus der Gruppe, umfassend:
- Bluetooth Modul, insbesondere Bluetooth-Low-Energy Modul,
- RFID-Modul,
- GSM-Modul, und
- WLAN-Modul.

3. Schutzvorrichtung (208), insbesondere Helm (208), umfassend mindestens eine Detektionsvorrichtung (100, 200) nach Anspruch 1 oder 2.

4. Schutzvorrichtung (208) nach Anspruch 3, **dadurch gekennzeichnet, dass**
- die Schutzvorrichtung (208) mindestens ein Energieversorgungsmodul (218) umfasst,
- wobei das Energieversorgungsmodul (218) zumindest zum Versorgen des ersten drahtlosen Kommunikationsmoduls (104, 204) mit elektrischer Energie eingerichtet ist, derart, dass zumindest das Aussenden der detektierten Zustandsinformation über den drahtlosen Kommunikationskanal ermöglicht wird.

5. System, umfassend:
- mindestens eine Detektionsvorrichtung (100, 200) nach einem der Ansprüche 1 oder 2, und
- mindestens eine Auswertevorrichtung (322, 422) für ein Fahrzeug (430), insbesondere ein Motorrad (430), umfassend:
- mindestens ein zweites drahtloses Kommunikationsmodul (324, 424), eingerichtet zum Empfangen eines detektierten Zustands eines Verschlussmittels (212) einer Schutzvorrichtung (208), insbesondere einer Schutzvorrichtung (208) nach einem der vorherigen Ansprüche 3 oder 4, eines Nutzers des Fahrzeugs (430), und
- mindestens ein Auswertemodul (326, 426), eingerichtet zum Bestimmen des Zustands des Verschlussmittels (212) zumindest in Abhängigkeit der empfangbaren detektierten Zustandsinformation und eingerichtet zum Ausgeben des bestimmten Zustands des Verschlussmittels (212).

6. System nach Anspruch 5, **dadurch gekennzeichnet, dass** das zweite drahtlose Kommunikationsmodul (324, 424) ausgewählt ist aus der Gruppe, umfassend:
- Bluetooth Modul, insbesondere Bluetooth-Low-Energy Modul,
- RFID-Modul,
- GSM-Modul, und
- WLAN-Modul.

7. System nach Anspruch 5 oder 6, **dadurch gekennzeichnet, dass**
- das System ein Fahrzeug (430), insbesondere Motorrad (430), umfasst, umfassend die mindestens eine Auswertevorrichtung.

8. System nach Anspruch 7, **dadurch gekennzeichnet, dass**
- das Fahrzeug (430) mindestens ein akustisches und/oder optisches Anzeigemodul (436) umfasst,
- wobei das Anzeigemodul (436) zum Anzeigen des ausgegebenen Zustands des Verschlussmittels (212) eingerichtet ist.

9. System nach einem der vorherigen Ansprüche 7 oder 8, **dadurch gekennzeichnet, dass**
- das Fahrzeug (430) mindestens eine Sitzeinrichtung (438, 440) mit mindestens einem der Sitzeinrichtung (438, 440) zugeordneten Anwesenheitssensor (442, 444) umfasst,
- wobei der Anwesenheitssensor (442, 444) zum Detektieren einer Anwesenheitsinformation eines Nutzers auf der Sitzeinrichtung (438, 440) eingerichtet ist, und
- das Auswertemodul (326, 426) zum Bestimmen des Zustands des Verschlussmittels (212) in Abhängigkeit der empfangbaren detektierten Zustandsinformation und der Anwesenheitsinformation eingerichtet ist.

10. Verfahren zum Betreiben eines Systems nach einem der Ansprüche 5 bis 9, umfassend:
- Detektieren einer Zustandsinformation eines Verschlussmittels (212) einer Schutzvorrichtung (208),
- drahtloses Übertragen der detektierten Zustandsinformation des Verschlussmittels (212) von einem erstes drahtlosen Kommunikationsmodul (104, 204) der Detektionsvorrichtung (100, 200) an mindestens ein zweites drahtloses Kommunikationsmodul (324, 424) der Auswertevorrichtung (322, 422),
- Bestimmen des Zustands des Verschlussmittels (212) zumindest in Abhängigkeit der empfangbaren Zustandsinformation, und
- Ausgeben des bestimmten Zustands des Verschlussmittels (212).

## Claims

1. Detection device (100, 200) for a protective device (208), in particular a helmet (208), of a user of a vehicle (430), wherein the protective device (208) comprises at least one fastening arrangement (210) with at least one closure means (212),
- wherein the detection device (100, 200) comprises at least one state sensor (102, 202) configured to detect a state information of the locking means (212), and
- wherein the detection device (100, 200) comprises at least a first wireless communication module (104, 204) configured at least to transmit the detected state information via a wireless communication channel,
**characterised in that**
- the first wireless communication module (104, 204) is configured to receive data, wherein information about the activation of a flasher unit is transmitted as data.

2. Detection device (100, 200) according to claim 1, **characterized in that** the first wireless communication module (104, 204) is selected from the group comprising:
- Bluetooth module, in particular Bluetooth low energy module,
- RFID module,
- GSM module, and
- WLAN module.

3. Protective device (208), in particular helmet (208), comprising at least one detection device (100, 200) according to claim 1 or 2.

4. Protective device (208) according to claim 3, **characterized in that**
- the protective device (208) comprises at least one power supply module (218),
- wherein the power supply module (218) is configured to at least supply electrical power to the first wireless communication module (104, 204) such as to enable at least the transmitting of the detected status information over the wireless communication channel.

5. A system comprising:
- at least one detection device (100, 200) according to one of claims 1 or 2, and
- at least one evaluation device (322, 422) for a vehicle (430), in particular a motorbike (430), comprising:
- at least one second wireless communication module (324, 424) configured to receive a detected state of a locking means (212) of a protection device (208), in particular a protection device (208) according to one of the previous claims 3 or 4, of a user of the vehicle (430), and
- at least one evaluation module (326, 426) configured to determine the state of the locking means (212) at least as a function of the receivable detected state information and configured to output the determined state of the locking means (212).

6. System according to claim 5, **characterized in that** the second wireless communication module (324, 424) is selected from the group comprising:
- Bluetooth module, in particular Bluetooth low energy module,
- RFID module,
- GSM module, and
- WLAN module.

7. System according to claim 5 or 6, **characterized in that**
- the system comprises a vehicle (430), in particular a motorbike (430), comprising the at least one evaluation device.

8. System according to claim 7, **characterised in that**
- the vehicle (430) comprises at least one acoustic and/or visual display module (436),
- wherein the display module (436) is configured to display the output state of the locking means (212).

9. System according to any one of the preceding claims 7 or 8, **characterized in that**
- the vehicle (430) comprises at least one seat means (438, 440) having at least one presence sensor (442, 444) associated with the seat unit (438, 440),
- wherein the presence sensor (442, 444) is configured to detect a presence information of a user on the seat unit (438, 440), and
- the evaluation module (326, 426) is configured to determine the state of the locking means (212) in dependence on the receivable detected state information and the presence information.

10. A method of operating a system according to any one of claims 5 to 9, comprising:
- detecting status information of a locking means (212) of a protection device (208),
- wirelessly transmitting the detected state information of the locking means (212) from a first wireless communication module (104, 204) of the detection device (100, 200) to at least a second wireless communication module (324, 424) of the evaluation device (322, 422),
- determining the state of the locking means (212) at least as a function of the receivable state information, and
- outputting the determined state of the closure means (212).

## Revendications

1. Dispositif de détection (100, 200) pour un dispositif de protection (208), notamment un casque (208), d'un utilisateur d'un véhicule (430), le dispositif de protection (208) comprenant au moins un arrangement de fixation(210) avec au moins un moyen de fermeture (212),
- où le dispositif de détection (100, 200) comprend au moins un capteur d'état (102, 202) configuré pour détecter une information d'état du moyen de fermeture (212), et
- où le dispositif de détection (100, 200) comprend au moins un premier module de communication sans fil (104, 204) configuré pour au moins émettre l'information d'état détectée via un canal de communication sans fil, **caractérisé en ce que**
- le premier module de communication sans fil (104, 204) est configuré pour recevoir des données, des informations sur l'activation d'un dispositif de clignotement étant transmises en tant que données.

2. Dispositif de détection (100, 200) selon la revendication 1,
**caractérisé en ce que**
le premier module de communication sans fil (104, 204) est choisi dans l.e groupe comprenant :
- module Bluetooth, notamment module Bluetooth basse énergie,
- module RFID,
- module GSM, et
- module de réseau local sans fil (WLAN).

3. Dispositif de protection (208), notamment casque (208), comprenant au moins un dispositif de détection (100, 200) selon la revendication 1 ou 2.

4. Dispositif de protection (208) selon la revendication 3,
**caractérisé en ce que**
- le dispositif de protection (208) comprend au moins un module d'alimentation en énergie (218),
- le module d'alimentation (218) étant configuré pour alimenter au moins le premier module de communication sans fil (104, 204) en énergie électrique, de manière à permettre au moins l'émission de l'information d'état détectée via le canal de communication sans fil.

5. Système comprenant :
- au moins un dispositif de détection (100, 200) selon l'une des revendications 1 ou 2, et
- au moins un dispositif d'évaluation (322, 422) pour un véhicule (430), notamment une motocyclette (430), comprenant :
- au moins un deuxième module de communication sans fil (324,424), configuré pour recevoir un état détecté d'un moyen de fermeture (212) d'un dispositif de protection (208), notamment un dispositif de protection (208) selon l'une des revendications précédentes 3 ou 4, d'un utilisateur du véhicule (430), et
- au moins un module d'évaluation (326, 426), configuré pour déterminer l'état du moyen de fermeture (212) au moins en fonction de l'information d'état détectée pouvant être reçue, et configuré pour délivrer l'état déterminé du moyen de fermeture (212).

6. Système selon la revendication 5,
**caractérisé en ce que**
le deuxième module de communication sans fil (324, 424) est choisi dans le groupe comprenant :
- module Bluetooth, notamment module Bluetooth basse énergie,
- module RFID,
- modulé GSM, et
- module de réseau local sans fil (WLAN).

7. Système selon la revendication 5 ou 6,
**caractérisé en ce que**
- le système comprend un véhicule (430), notamment une motocyclette (430), comprenant l'au moins un dispositif d'évaluation.

8. Système selon la revendication 7,
**caractérisé en ce que**
- le véhicule (430) comprend au moins un module d'indication acoustique et/ou optique (436),
- le module d'indication (436) étant agencé pour indiquer l'état délivré du moyen de fermeture (212).

9. Système selon l'une des revendications précédentes 7 ou 8,
**caractérisé en ce que**
- le véhicule (430) comprend au moins un dispositif d'assise (438, 440) comportant au moins un capteur de présence (442, 444) associé au dispositif d'assise (438, 440),
- le capteur de présence (442, 444) étant configuré pour détecter une information de présence d'un utilisateur sur le dispositif de siège (438, 440), et
- le module d'évaluation (326, 426) est configuré pour déterminer l'état du moyen de fermeture (212) en fonction de l'information d'état détectée pouvant être reçue et de l'information de présence.

10. Procédé de mise en œuvre d'un système selon l'une des revendications 5 à 9, comprenant :
- détecter une information d'état d'un moyen de fermeture (212) d'un dispositif de protection (208),
- transmettre sans fil l'information d'état détectée du moyen de fermeture (212) depuis un premier module de communication sans fil (104, 204) du dispositif de détection (100, 200) vers au moins un deuxième module de communication sans fil (324, 424) du dispositif d'évaluation (322, 422),
- déterminer l'état du moyen de fermeture (212) au moins en fonction de l'information d'état pouvant être reçue, et
- émission de l'état déterminé du moyen de fermeture (212).
